# EUROPEAN PATENT APPLICATION

(11) **EP 4 450 572 A1**
(43) Date of publication of application: **23.10.2024**
(21) Application number: 24167482.9
(22) Date of filing: 28.03.2024
(51) Int. Cl.: C09D 11/328, C09D 11/38, C09D 11/14

(54) **INK AND TABLET**

(30) Priority: 10.04.2023 JP 2023063342
(71) Applicant: Toppan Holdings Inc., Tokyo 110-0016 (JP)
(72) Inventor: HASHIMOTO, Risa, Tokyo, 110-0016 (JP); KOSEKI, Seiya, Tokyo, 110-0016 (JP); HOSHINO, Yuichi, Tokyo, 110-0016 (JP); SAITO, Masatoshi, Tokyo, 110-0016 (JP); MIYAZAWA, Yasuhisa, Tokyo, 110-0016 (JP); UCHIYAMA, Hiromitsu, Tokyo, 110-0016 (JP)
(74) Representative: Hoffmann Eitle

(57) **Abstract**

This invention aims to provide an ink capable of sufficiently suppressing photodiscoloration and/or photofading of printed images, maintaining lightfastness, and imparting excellent printability even when the ink is used and printed tablets are stored in a normal humidity environment (about 50%RH), and a tablet including printed parts printed with the ink.

An ink according to this embodiment contains: Red No. 102; lactose; and a solvent, in which the compounding ratio of the lactose is from 0.5 wt% to 15 wt% based on the total mass of the ink, water and at least one of ethanol, NPA, IPA, glycerol, and PG are contained as the solvent, the compounding ratio of the PG is from 0.05 wt% to 10 wt% based on the total mass of the ink, and the compounding ratio of the alcohol contained as the solvent is from 20 wt% to 60 wt% based on the total mass of the ink.

## Description

### Technical Field

The present invention relates to inks and tablets.

### Background Art

Some inkjet printing inks (hereinafter also simply referred to as an "inkjet ink" or "ink") are edible with use of food dyes, such as tar pigments, for example, as colorants.

Conventionally, some inkjet inks cause discoloration in which the color tone (hue) of the colorants has changed in printed characters, images, and the like due to the deterioration of the colorants or cause fading due to desaturation or the like of the colorants. For example, when the inkjet inks are insufficient in lightfastness, the colorants are affected by light and decompose (undergo photolysis) to cause discoloration and/or fading (photodiscoloration and/or photofading). Such discoloration and/or fading is perceived as a decrease in visibility in printed characters, images, and the like (hereinafter collectively referred to as "printed images").

To suppress the discoloration and/or fading of the printed images, technologies are being developed, and various methods for suppressing the discoloration and/or fading have been proposed (e.g., PTL 1).

When characters or images are printed on tablets and the like, inkjet inks and the like containing food dyes having coloring properties are sometimes used to increase the visibility. Some food dyes contained in the inks and the like cause significant discoloration and/or fading due to light.

With respect to Food Red No. 102 among the food dyes contained in the inkjet inks and the like, the lightfastness is sometimes improved by compounding lactose in the inks.

However, some of the inkjet inks and the like containing the Food Red No. 102 and the lactose are susceptible to the influence of the usage environment of the inks and the like or the storage environment (particularly the influence of humidity) of tablets and the like having the printed images printed with the inks and the like. For example, some of the inkjet inks and the like containing the Food Red No. 102 and the lactose decrease in lightfastness when the inks and the like are used in environments of normal humidity to high humidity. Alternatively, some of tablets and the like having the printed images printed with the inks and the like decrease in lightfastness when the tablets and the like are stored in environments of normal humidity to high humidity.

Therefore, some of the inkjet inks and the like containing the Food Red No. 102 and the lactose are difficult to maintain sufficient lightfastness unless used in a low humidity environment. Alternatively, some of the tablets and the like having the printed images printed with the inkjet inks and the like containing the Food Red No. 102 and the lactose are difficult to maintain sufficient lightfastness unless stored in a low humidity environment.

In recent years, a demand for inkjet inks having excellent drying properties has been increasing. Thus, when the content of a drying solvent, such as alcohol (lower alcohol), contained in the inkjet inks is increased to enhance the drying properties of the inkjet inks, the drying on the nozzle liquid level of a nozzle provided in an inkjet printer is accelerated, deteriorating the dischargeability of the inkjet inks or causing the precipitation of the colorants. In particular, the inkjet inks containing the Food Red No. 102 tend to deteriorate in the dischargeability of the inkjet inks.

### Citation List

### Patent Literature

PTL 1: JP 6389506 B

### Summary of Invention

### Technical Problem

The present invention has been made in view of the above-described respects, and aims to provide an ink (inkjet ink) capable of sufficiently suppressing the photodiscoloration and/or photofading of printed images, maintaining the lightfastness, and imparting excellent printability not only when the inkjet ink (ink) is used and printed tablets are stored in a low humidity environment (about 25°C/20%RH) but when the inkjet ink (ink) is used and printed tablets are stored in a normal humidity environment (about 25°C/50%RH), and a tablet including printed parts printed with the ink (inkjet ink). More specifically, this application aims to provide an ink (inkjet ink) that is made resistant to the influence of humidity (change in physical properties, such as lightfastness) while the ink has excellent printability (particularly intermittent resumability) and a tablet including printed parts printed with the ink (inkjet ink).

Thus, this application aims to provide an ink (inkjet ink) that has excellent printability and is reduced even in a change in physical properties (deterioration of lightfastness and the like) due to humidity, which has not been conventionally considered so much, and a tablet including printed parts printed with the ink (inkjet ink).

Hereinafter, the humidity expressions without any description of temperatures are expressed as the relative humidity at normal temperature of 25°C. More specifically, a "low humidity environment (about 20%RH)" described later means a normal temperature and low humidity environment (about 25°C/20%RH), and a "normal humidity environment (about 50%RH)" described later means a normal temperature and normal humidity environment (about 25°C/50%RH).

### Solution to Problem

To achieve the above-described aim, an ink (inkjet ink) according to one aspect of the present invention contains: Red No. 102; lactose having solubility in 100 mL of 20°C water of less than 20 g; and a solvent, in which the compounding ratio of the lactose is in the range of 0.5 wt% or more and 15 wt% or less based on the total mass of the ink, water and at least one of ethanol, normal propyl alcohol, isopropyl alcohol, glycerol, and propylene glycol are contained as the solvent, the compounding ratio of the propylene glycol is in the range of 0.05 wt% or more and 10 wt% or less based on the total mass of the ink, and the compounding ratio of the alcohol contained as the solvent is in the range of 20 wt% or more and 60 wt% or less based on the total mass of the ink.

An ink (inkjet ink) according to another aspect of the present invention contains: Red No. 102; lactose having solubility in 100 mL of 20°C water of less than 20 g; and a solvent, in which only the lactose is contained as a fixing agent, the compounding ratio of the lactose is in the range of 1.0 wt% or more and 3.0 wt% or less based on the total mass of the ink, water, ethanol, and propylene glycol are contained and glycerol is not contained as the solvent, the compounding ratio of the propylene glycol is in the range of 0.05 wt% or more and 10 wt% or less based on the total mass of the ink, the compounding ratio of the ethanol is in the range of 20 wt% or more and 40 wt% or less based on the total mass of the ink, the compounding ratio of the Red No. 102 is in the range of 1.0 wt% or more and 1.6 wt% or less based on the total mass of the ink, and a ratio of the mass of the lactose to the mass of the Red No. 102 (Lactose/Red No. 102) is in the range of 1.0 or more and 3.5 or less.

Further, to achieve the above-described aim, a tablet according to one aspect of the present invention includes printed parts printed using the above-described ink (inkjet ink).

### Advantageous Effects of Invention

One aspect of the present invention can sufficiently suppress the photodiscoloration and/or photofading of the printed images, maintain the lightfastness of the ink (inkjet ink), and impart excellent printability not only when the ink (inkjet ink) is used and printed tablets are stored in a low humidity environment (about 20%RH) but when the ink (inkjet ink) is used and printed tablets are stored in a normal humidity environment (about 50%RH). More specifically, one aspect of the present invention provides the inkjet ink capable of reducing the influence of humidity (change in physical properties, such as lightfastness) while the inkjet ink has excellent printability (particularly intermittent resumability), and the tablet including the printed parts printed with the inkjet ink.

### Brief Description of Drawings

FIGS. 1A to 1C are conceptual views illustrating the permeability and the lightfastness of an inkjet ink in an embodiment of the present invention;
FIG. 2 is a schematic cross-sectional view illustrating one example of a tablet (uncoated tablet) according to the embodiment of the present invention;
FIG. 3 is a schematic cross-sectional view illustrating one example of a tablet (film-coated tablet) according to the embodiment of the present invention;
FIG. 4 is one example of a printed image of the tablet (uncoated tablet) according to the embodiment of the present invention; and
FIG. 5 is one example of a printed image of the tablet (film-coated tablet) according to the embodiment of the present invention.

### Description of Embodiments

An inkjet ink (ink) according to an embodiment of the present invention (hereinafter referred to as "this embodiment") relates to an inkjet ink capable of sufficiently suppressing the photodiscoloration and/or photofading of printed images and the like printed on the surfaces of medicine tablets by an inkjet printing method, maintaining the lightfastness, and imparting excellent printability, for example, not only when the inkjet ink (ink) is used and printed tablets are stored in a low humidity environment (about 20%RH) but when the inkjet ink (ink) is used and printed tablets are stored in a normal humidity environment (about 50%RH). Hereinafter, the compositions of the inkjet ink and the tablet including printed parts printed with the inkjet ink according to the embodiment of the present invention are described in detail.

### [Composition of inkjet ink]

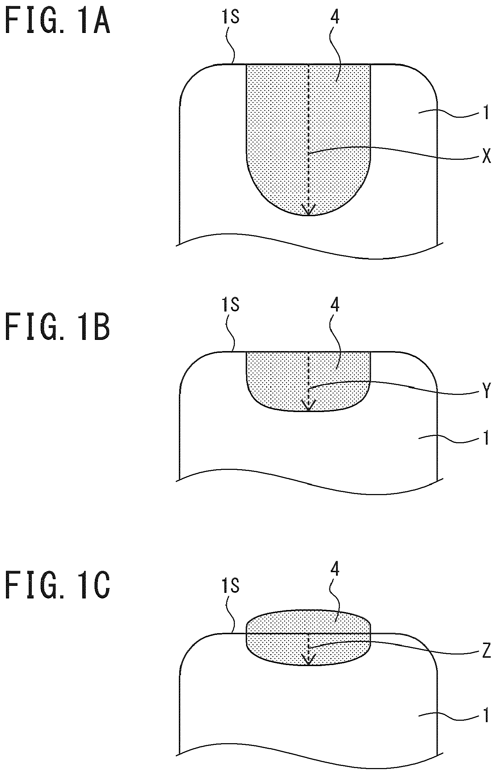

The inkjet ink according to this embodiment is an edible inkjet ink and contains Food Red No. 102 as a food dye (food pigment). Hereinafter, this food dye is simply referred to as "Red No. 102". The inkjet ink according to this embodiment further contains, as a fixing agent for fixing the ink to the surface of a printing target (e.g., solid formulation), lactose as a saccharide having solubility in water satisfying the predetermined condition. Specifically, lactose belonging to disaccharides having solubility in 100 ml of 20°C water of less than 20 g is used as the fixing agent in this embodiment. With this composition, even when the inkjet ink (ink) is used and printed tablets are stored in a normal humidity environment (about 50%RH), the photodiscoloration and/or photofading of the printed images can be sufficiently suppressed, the lightfastness of the inkjet ink can be maintained, and excellent printability (particularly intermittent resumability) can be achieved. Hereinafter, the mechanism related to an improvement of the lightfastness is described with reference to FIGS. 1A to 1C. Then, the mechanism related to an improvement of the printability (particularly intermittent resumability) is described.

FIGS. 1A to 1C are conceptual views for explaining the relationship between the fixation and the lightfastness of the ink on the surface of the printing target (solid formulation). Herein, a tablet including a film-coated part having few voids, i.e., a film-coated (FC) tablet, is used as the solid formulation. The present invention is not limited thereto, and the printing target may also be an uncoated tablet or a capsule tablet.

FIGS. 1A to 1C are schematic cross-sectional views in the thickness direction of tablets (herein, film-coated tablets) after a certain period of time has passed from the printing of inkjet inks A to C having different compositions on the tablets. In this example, the inkjet ink A is an ink containing a specific dye 4 as a colorant, and a mixture containing water and at least one of ethanol, normal propyl alcohol (NPA), isopropyl alcohol (IPA), glycerol, and propylene glycol (PG) as a solvent. As the specific dye 4, the Red No. 102 can be exemplified.

The inkjet ink B is an ink obtained by adding a predetermined saccharide to the inkjet ink A. Herein, the saccharide added to the inkjet ink B is a saccharide (e.g., maltose) having relatively high solubility in water and not corresponding to the fixing agent in this embodiment. The inkjet ink C is an ink obtained by adding the lactose corresponding to the fixing agent to the inkjet ink A.

Specifically, FIG. 1A is a schematic cross-sectional view in the thickness direction of the tablet when a certain period of time (e.g., 140 hours) has passed from the printing of the inkjet ink A on a surface 1S of a substrate 1 of the tablet, the inkjet ink A containing the specific dye 4 as the colorant and containing a mixture containing water and at least one of ethanol, normal propyl alcohol (NPA), isopropyl alcohol (IPA), glycerol, and propylene glycol (PG) as the solvent. FIG. 1B is a schematic cross-sectional view in the thickness direction of the tablet when a certain period of time (e.g., 140 hours) has passed from the printing of the inkjet ink B on the surface 1S of the substrate 1 of the tablet. FIG. 1C is a schematic cross-sectional view in the thickness direction of the tablet when a certain period of time (e.g., 140 hours) has passed from the printing of the inkjet ink C on the surface 1S of the substrate 1 of the tablet.

First, the addition or non-addition of saccharides and the permeability of the dyes in the inkjet inks are described taking the inkjet inks A, B as examples.

Among various colorants used for the inkjet inks, tar pigments used as the food dye, for example, can cause discoloration and/or fading in letters, images, and the like printed on the surfaces of solid formulations or the like. For example, the Red No. 102 among the tar pigments has caused discoloration and/or fading of the printed images due to permeation into the solid formulations with the lapse of time or photolysis. To address the problem, a method for suppressing the permeation of the dye into the solid formulations and suppressing the discoloration and/or fading of the printed images by adding saccharides to the inkjet inks is known.

As illustrated in FIG. 1A, when the inkjet ink A containing no saccharides is printed, the specific dye 4 permeates into the substrate 1 of the tablet after the lapse of the certain period of time from the printing. Herein, the depth of the permeation of the specific dye 4 in the inkjet ink A after the lapse of the certain period of time is defined as a permeation depth X (um). In contrast thereto, when the inkjet ink B containing the saccharide is printed, a permeation depth Y (µm) of the inkjet ink B is smaller than the permeation depth X of the inkjet ink A (X > Y) after the lapse of the certain period of time from the printing as illustrated in FIG. 1B.

In the inkjet ink B, the addition of the predetermined saccharide increases the viscosity or the like of the ink, suppressing the permeation of the specific dye 4 into the substrate 1 of the tablet. Therefore, when the inkjet ink B is printed, the specific dye 4 remains in the vicinity of the surface 1S in the substrate 1 of the tablet even after the lapse of the certain period of time from the printing. More specifically, the inkjet ink containing the predetermined saccharide can suppress the discoloration and/or fading of the printed images due to the permeation of the dye (i.e., Red No. 102) as compared with a case where no saccharides are added. Meanwhile, the inkjet ink B added with the predetermined saccharide cannot sufficiently suppress the discoloration and/or fading (photodiscoloration and/or photofading) of the printed images due to irradiation with light.

In contrast thereto, the inkjet ink according to this embodiment fixes the ink to the surface of the printing target to sufficiently suppress the photodiscoloration and/or photofading of the printed images and enhance the lightfastness by selecting the type or the physical properties of the saccharide (i.e., lactose) and the solvent to be added. The present inventors have found that the fixing of the ink onto the surface of the printing target (e.g., tablet) is effective for suppressing the photodiscoloration and/or photofading of the printed images. In this example, the ink is fixed onto the surface 1S of the tablet to thereby fix the specific dye 4 onto the surface 1S, and, as a result, the specific dye 4 can be allowed to remain at a high density on the surface 1S.

A high density of the specific dye 4 on the surface 1S of the substrate 1 of the tablet reduces the proportion of the colorant causing the photodiscoloration and/or photofading due to the photolysis of the specific dye 4 on the surface 1S, for example. More specifically, even when the photodiscoloration and/or photofading occurs in a part of the specific dye 4, the influence is limited, and the decrease in visibility (readability) of the printed images is suppressed. Thus, the visibility of the whole printed images can be maintained, and, as a result, the photodiscoloration and/or photofading of the printed images can be sufficiently suppressed. Therefore, the lightfastness of the inkjet ink can be enhanced. Then, the present inventors have found that disaccharides having relatively low solubility in water (particularly lactose) among saccharides function as the fixing agent fixing the ink containing the Red No. 102 as the colorant to the surface of the printing target not only when the inkjet ink (ink) is used and printed tablets are stored in a low humidity environment (about 20%RH) but when the inkjet ink (ink) is used and printed tablets are stored in a normal humidity environment (about 50%RH).

Specifically, the inkjet ink according to this embodiment contains the Red No. 102 as the food dye, which is the colorant, and the lactose belonging to disaccharides having solubility in 100 ml of 20°C water of less than 20 g as the fixing agent. With this composition, even when the inkjet ink (ink) is used and printed tablets are stored in a normal humidity environment (about 50%RH), the ink containing the specific tar pigment (Red No. 102 in this example) used as the colorant can be fixed to the surface of the printing target, and the above-described specific tar pigment can be allowed to remain at a high density on the surface. Thus, the inkjet ink according to this embodiment can sufficiently suppress the photodiscoloration and/or photofading of the printed images and enhance the lightfastness.

As illustrated in FIG. 1C, when the inkjet ink C corresponding to the inkjet ink according to this embodiment is printed on the surface 1S of the substrate 1 of the tablet, the specific dye 4 (herein, Red No. 102) in the ink is fixed to the surface 1S. Specifically, when the printing inkjet ink C is printed, a permeation depth Z (µm) of the specific dye 4 after the lapse of the certain period of time from the printing is further reduced as compared with the permeation depth Y of the specific dye 4 in the inkjet ink B containing the predetermined saccharide (Y > Z). For example, the permeation depth Z of the specific dye 4 in the inkjet ink C is reduced to about 50% of the permeation depth Y of the specific dye 4 in the inkjet ink B. More specifically, the inkjet ink C can further suppress the permeation of the specific dye 4. Therefore, the specific dye 4 remains at a high density on the surface 1S, and the decrease in the visibility of the printed images is suppressed as described above. Thus, even when the inkjet ink C is used and printed tablets are stored in a normal humidity environment (about 50%RH), the photodiscoloration and/or photofading of the printed images is sufficiently suppressed, and the inkjet ink C can enhance the lightfastness.

Meanwhile, the inkjet ink B allows the specific dye 4 to remain in the vicinity of the surface 1S inside the substrate 1 of the tablet, but the permeation of the specific dye 4 cannot be sufficiently suppressed and the ink cannot be fixed onto the surface 1S. More specifically, in the inkjet ink B, the density of the specific dye 4 remaining on the surface 1S is low, and therefore the photodiscoloration and/or photofading of the printed images cannot be sufficiently suppressed and the lightfastness is not enhanced (improved).

Thus, the inkjet ink according to this embodiment is added with the lactose belonging to disaccharides as the fixing agent, and therefore, even when the inkjet ink (ink) is used and printed tablets are stored in a normal humidity environment (about 50%RH), the permeation of the specific tar pigment (Red No. 102) into the printing target is significantly suppressed and the ink is fixed to the surface of the printing target. Thus, the inkjet ink according to this embodiment can suppress the photodiscoloration and/or photofading of the printed images and enhance the lightfastness, and further, can suppress even the discoloration and/or fading of the printed images due to the permeation of the specific tar pigment into the printing target.

As illustrated in FIG. 1C, the inkjet ink C can be fixed onto the surface 1S of the substrate 1 of the tablet to be slightly raised. Thus, when the inkjet ink C is printed, for example, the printing is perceived as deep and floating on the surface 1S. Therefore, the inkjet ink C can enhance the visibility in the printing of the printed images as compared with the inkjet inks A, B, for example. More specifically, the inkjet ink according to this embodiment can impart good visibility to the printed images at the time of the printing in addition to reducing the decrease in the visibility due to the photodiscoloration and/or photofading of the printed images.

Hereinafter, the details of the lightfastness in the inkjet ink according to this embodiment are described.

The inkjet ink according to this embodiment may have a color difference ΔE of 25 or less according to JIS Z 8781 before and after a lightfastness test. Herein, the lightfastness test refers to a test of comparing the color differences ΔE (according to JIS Z 8781) for the printed images printed using the inkjet ink according to this embodiment, for example, the color difference ΔE indicating the change in the chromaticity and the optical color density before and after irradiation with visible light. Specifically, the color difference ΔE is measured before and after the emission of a cumulative 1.2 million lux of visible light to the printed images, and the values are compared. For the irradiation with the visible light, a xenon weather meter (Ci4000, Toyo Seiki Seisaku-sho, Ltd.) is used, for example. The printed images in the lightfastness test are solid-printed images solid-printed on a tablet (e.g., film-coated tablet), which is the printing target, for example.

The lightfastness necessary and sufficient for the formation of the printed images on medicine tablets and the like refers to, in the lightfastness test in which the printed images are irradiated with a 1.2 million lux of visible light, a case where the color difference ΔE of the printed images before and after the irradiation with the visible light is 25 or less in many cases. Use of the color difference ΔE of 25 or less as the criterion of sufficient lightfastness has been derived as a result of opinion tests carried out by the present inventors with medical professionals. When the color difference ΔE exceeds 25, a decrease in the visibility (e.g., readability of printing) of the printed images begins to be perceived. More specifically, when the color difference ΔE before and after the irradiation with the visible light is 25 or less, it can be said that the inkjet ink sufficiently suppresses the photodiscoloration and/or photofading and has excellent lightfastness. Although this numerical value is larger than the standard color difference ΔE of 3 to 6 in general commercial printed matter, tablets before and after the exposure to light are usually not compared, and the printed images of the tablet surfaces are assumed to naturally fade, and therefore this numerical value was able to be obtained.

The reason why the inkjet ink according to this embodiment contains the lactose which is a disaccharide satisfying the condition that the solubility in 100 ml of 20°C water is less than 20 g as the fixing agent is as follows. When saccharides not satisfying the above-described condition are added (e.g., maltose having solubility in 100 ml of 20°C water of 52 g), the specific tar pigment, i.e., Red No. 102, on the tablet surface is not sufficiently fixed to the surface of the printing target, and the color difference ΔE exceeds 25 when the above-described lightfastness test is performed for the solid-printed images. By adding the disaccharide having the solubility in water satisfying the above-described condition as the fixing agent, the color difference ΔE before and after the lightfastness test becomes less than 25, and excellent lightfastness is imparted to the inkjet ink.

Hereinafter, each component constituting the inkjet ink according to this embodiment is described.

### (Colorant)

As described above, the inkjet ink according to this embodiment contains the Red No. 102 as the food dye. The Red No. 102 is an edible tar pigment, and the Red No. 102 is also referred to as New Coccine.

In the inkjet ink according to this embodiment, the compounding ratio of the Red No. 102, i.e., the content of the Red No. 102, is preferably in the range of 1.0 wt (mass)% or more and 1.6 wt (mass)% or less based on the total mass of the ink. With this composition, good visibility can be imparted to the printed images and high intermittent resumability (i.e., excellent printability) can be imparted to the printed images. When the content of the Red No. 102 is in the range above, the addition of the lactose, which is the fixing agent, can more reliably allow the Red No. 102 to remain at a high density on the surface of printed matter to suppress the photodiscoloration and/or photofading in the printed images and reliably enhance the lightfastness of the inkjet ink according to this embodiment.

In contrast thereto, when the content of the Red No. 102 is less than 1.0 wt%, the whole printed color tends to be lighter and the visibility of the printed images tends to decrease. Further, when the content of the Red No. 102 is less than 1.0 wt%, the lightfastness decreases or the lightfastness is not exhibited in some cases when the inkjet ink (ink) is used and printed tablets are stored in a normal humidity environment (about 50%RH).

When the content of the Red No. 102 exceeds 1.6 wt%, the dissolution stability of the colorant deteriorates, so that the pigment in the ink is precipitated or deposited as a solid, causing nozzle clogging of an inkjet head in printing, and so-called printing resumability (intermittent resumability) can deteriorate.

The content of the Red No. 102 is more preferably in the range of 1.0 wt% or more and 1.4 wt% or less and still more preferably in the range of 1.2 wt% or more and 1.4 wt% or less based on the total mass of the ink.

The inkjet ink according to this embodiment may contain pigments (colorants) other than the above-described specific tar pigment, i.e., Red No. 102. The pigments other than the Red No. 102 are not particularly limited insofar as they are edible. The pigments that can be added to the inkjet ink according to this embodiment can be appropriately selected from conventionally known synthetic food pigments and natural food pigments, for example, and added. When the inkjet ink according to this embodiment contains the colorants other than the Red No. 102 as the food dye, the total content of the food dyes other than the Red No. 102 is preferably in the range of 1.0 wt% or less, more preferably in the range 0.4 wt% or less, and still more preferably in the range of 0.2 wt% or less based on the total mass of the ink. When the total content of the food dyes other than the Red No. 102 is in the ranges above, good visibility can be imparted to the printed images while the lightfastness of the inkjet ink is enhanced and sufficient intermittent resumability can be imparted to the inkjet ink.

The synthetic food pigments include tar pigments, natural pigment derivatives, natural synthetic pigments, and the like, for example. The tar pigments include Food Red No. 2, Food Red No. 3, Food Red No. 40, Food Red No. 104, Food Red No. 105, Food Red No. 106, Food Yellow No. 4, Food Yellow No. 5, Food Blue No. 1, Food Blue No. 2, Food Red No. 2 Aluminum Lake, Food Red No. 3 Aluminum Lake, Food Red No. 40 Aluminum Lake, Food Yellow No. 4 Aluminum Lake, Food No. 5 Aluminum Lake, Food Blue No. 1 Aluminum Lake, Food Blue No. 2 Aluminum Lake, and the like, for example. The natural pigment derivatives include norbixin potassium and the like, for example. The natural synthetic pigments include β-carotene, riboflavin, and the like, for example.

The natural food pigments include anthocyanin pigments, carotenoid pigments, quinone pigments, chlorophyll pigments, flavonoid pigments, betaine pigments, monascus pigments, and pigments originating from other natural products, for example. The anthocyanin pigments include a red radish pigment, a red cabbage pigment, a red rice pigment, an elderberry pigment, a cowberry pigment, a gooseberry pigment, a cranberry pigment, a salmonberry pigment, a perilla pigment, a thimblueberry pigment, a strawberry pigment, a dark sweet cherry pigment, a cherry pigment, a hibiscus pigment, a huckleberry pigment, a grape juice pigment, a grape skin pigment, a black currant pigment, a blackberry pigment, a blueberry pigment, a plum pigment, a whortle berry pigment, a boysenberry pigment, a mulberry pigment, a purple potato pigment, a purple corn pigment, a purple yam pigment, a raspberry pigment, a red currant pigment, a loganberry pigment, and other anthocyanin pigments, for example. The carotenoid pigments include an annatto pigment, a gardenia yellow pigment, and other carotenoid pigments, for example. The quinone pigments include a cochineal pigment, a lithospermum root pigment, a lac pigment, and other quinone pigments, for example. The flavonoid pigments include a safflower yellow pigment, a kaoliang pigment, an onion pigment, and other flavonoid pigments, for example. The betaine pigments include a beet red pigment, for example. The monascus pigments include a monascus pigment and a monascus yellow pigment, for example. The pigments originating from other natural products include a turmeric pigment, a trichotomine pigment, a gardenia red pigment, a spirulina blue pigment, and the like, for example.

### (Fixing agent)

As described above, the inkjet ink according to this embodiment contains the fixing agent for fixing the ink containing the specific tar pigment (Red No. 102) to the surface of the printing target. Specifically, the fixing agent contained in the inkjet ink according to this embodiment is the lactose belonging to disaccharides having solubility in 100 ml of 20°C water of less than 20 g. The lactose has solubility in 100 ml of 20°C water of 16 g. When the fixing agent has the composition above, the ink containing the Red No. 102 can be fixed to the surface of the printing target. This allows the inkjet ink according to this embodiment to sufficiently suppress the photodiscoloration and/or photofading of the printed images and enhance the lightfastness. Further, the lactose used as the fixing agent in this embodiment also has the function of suppressing the decomposition (photolysis) due to the irradiation with light of the inkjet ink. Therefore, the occurrence of the photodiscoloration and/or photofading itself can be suppressed.

The lactose to be added in the inkjet ink according to this embodiment has the same function as the function of the fixing agent, and is an additive having a function different from the function of surfactants in conventional technologies. Specifically, the surfactants used in conventional technologies generally have a large number of hydrophilic or hydrophobic groups, whereas the lactose used in this embodiment has relatively few hydrophilic or hydrophobic groups.

Therefore, the lactose used in this embodiment has a very low function as the surfactant.

Thus, the lactose in the inkjet ink according to this embodiment is used as the fixing agent and not used as the surfactant.

The compounding ratio of the fixing agent in the inkjet ink according to this embodiment, i.e., the content of the lactose, is in the range of 0.5 wt% or more and 15 wt% or less based on the total mass of the ink. With this composition, the ink fixing effect by the lactose can be more reliably exhibited and the lightfastness of the inkjet ink can be reliably enhanced. Further, high intermittent resumability can be imparted to the inkjet ink according to this embodiment.

In contrast thereto, when the compounding ratio of the lactose, which is the fixing agent, is less than 0.5 wt%, the ink fixing effect can decrease. When the compounding ratio of the lactose, which is the fixing agent, is less than 0.5 wt%, the lightfastness sometimes decreases. When the compounding ratio of the lactose, which is the fixing agent, exceeds 15 wt%, the fixing agent in the ink is precipitated or deposited as a solid due to an increase in the ink viscosity or the deterioration of the dissolution stability of the fixing agent, causing nozzle clogging of an inkjet head in printing, and the intermittent resumability can decrease.

The compounding ratio of the lactose is more preferably in the range of 1.0 wt% or more and 5.0 wt% or less based on the total mass of the ink, still more preferably in the range of 1.5 wt% or more and 5.0 wt% or less based on the total mass of the ink, and most preferably in the range of 2.0 wt% or more and 3.0 wt% or less based on the total mass of the ink.

A ratio of the mass of the lactose to the mass of the Red No. 102 in the inkjet ink according to this embodiment (Lactose/Red No. 102) is preferably in the range of 1.0 or more and 3.5 or less, more preferably in the range of 1.1 or more and 3.0 or less, and still more preferably in the range of 1.5 or more and 3.0 or less. With this composition, the ink fixing effect by the lactose can be more reliably exhibited and the lightfastness of the inkjet ink can be reliably enhanced. Further, high intermittent resumability can be imparted to the inkjet ink according to this embodiment.

In contrast thereto, when the ratio above (Lactose/Red No. 102) is less than 1.0, the ink fixing effect can decrease. Further, when the ratio above (Lactose/Red No. 102) is less than 1.0, the lightfastness decreases or the lightfastness is not exhibited in some cases when the inkjet ink (ink) is used and printed tablets are stored in a normal humidity environment (about 50% RH).

When the ratio above (Lactose/ Red No. 102) exceeds 3.5, the lactose in the ink is precipitated or deposited as a solid due to an increase in the ink viscosity or the deterioration of the dissolution stability of the lactose, causing nozzle clogging of an inkjet head in printing, and the intermittent resumability can deteriorate.

As described above, by setting the addition amount of the lactose in the inkjet ink in a specific numerical range, the printability (particularly intermittent resumability) can be improved.

Hereinafter, the mechanism related to the improvement of the printability (particularly intermittent resumability) is described.

The lactose added to the inkjet ink forms a coating film at the ink interface of the nozzle surface provided in an inkjet device, such as an inkjet printer, and has a function of preventing solvent evaporation. The coating film has the property of easily disintegrating and even redissolving in an ink discharge operation using a piezoelectric element provided in the inkjet device.

Therefore, the addition of the lactose to the inkjet ink suppresses the change in the physical properties of the ink near the nozzle surface of the inkjet device and enables stable discharge. As a result, the printability (particularly intermittent resumability) increases in the inkjet ink added with the lactose.

### (Solvent)

The inkjet ink according to this embodiment contains, in addition to the specific tar pigment (Red No. 102) and the fixing agent (lactose), a solvent (dispersion medium) to dissolve (disperse) the specific tar pigment and the fixing agent. The inkjet ink according to this embodiment contains water (e.g., purified water) and at least one of ethanol, normal propyl alcohol (NPA), isopropyl alcohol (IPA), glycerol, and propylene glycol (PG).

In general, saccharides have the property of hardly dissolving in alcohols. Therefore, in this embodiment, the solvent contains any of ethanol, normal propyl alcohol, isopropyl alcohol, glycerol, and propylene glycol, and therefore the solubility in the solvent of the lactose used as the fixing agent decreases. Thus, in the inkjet ink according to this embodiment, the ink fixing effect by the lactose is further enhanced, and the specific tar pigment (Red No. 102 in this example) contained in the ink can be allowed to remain at a higher density on the surface of the printing target (e.g., tablet). Accordingly, the lightfastness of the inkjet ink of this embodiment can be further enhanced.

The propylene glycol can function as a wetting agent to prevent the ink from drying at inkjet nozzles and impart sufficient intermittent resumability to the ink. The ethanol, normal propyl alcohol, and isopropyl alcohol have high volatility, and thus can enhance the transfer resistance (drying properties) of the inkjet ink. The addition of the alcohols above to the solvent in addition to the water can further enhance the lightfastness of the inkjet ink and impart the performance corresponding to each component to the inkjet ink.

The compounding ratio of each component of the above-described solvent in the inkjet ink according to this embodiment is not limited. When the solvent contains propylene glycol, the compounding ratio of the propylene glycol, i.e., the addition amount of the propylene glycol, is in the range of 0.05 wt% or more and 10 wt% or less based on the total mass of the ink. With this composition, the solubility of the fixing agent in the solvent reliably decreases, and the effect of fixing the ink containing the specific tar pigment is further enhanced. Therefore, more excellent lightfastness can be imparted to the inkjet ink.

Meanwhile, when the addition amount of the propylene glycol is less than 0.05 wt%, the effect of reducing the solubility of the fixing agent in the solvent can decrease. When the addition amount of the propylene glycol is less than 0.05 wt%, the printability sometimes decreases. When the addition amount of the propylene glycol exceeds 10 wt%, the drying of the printed surface on the tablet surface is further delayed, sometimes causing a defect in which, when printed tablets are brought into contact with each other, undried ink adheres to other tablets and causes staining (poor transfer).

The compounding ratio of the propylene glycol, i.e., the addition amount of the propylene glycol, is preferably in the range of 0.05 wt% or more and 1.5 wt% or less based on the total mass of the ink.

In this embodiment, the alcohol components of ethanol, normal propyl alcohol, isopropyl alcohol, glycerol, and propylene glycol can be added as the solvent, and the total compounding ratio of the alcohol components above, i.e., the total content of the alcohol components above, is in the range of 20 wt% or more and 60 wt% or less based on the total mass of the ink. With this composition, the solubility of the fixing agent in the solvent reliably decreases, and the effect of fixing the ink containing the specific tar pigment is further enhanced. Therefore, more excellent lightfastness can be imparted to the inkjet ink. Further, more excellent drying properties can be imparted to the inkjet ink.

Meanwhile, when the total content of the alcohol components above is less than 20 wt%, the effect of fixing the ink containing the specific tar pigment sometimes decreases. Further, the drying of the printed surface on the tablet surface is further delayed, sometimes causing a defect in which, when printed tablets are brought into contact with each other, undried ink adheres to other tablets and causes staining (poor transfer).

When the total content of the alcohol components above exceeds 60 wt%, the printability sometimes decreases.

The total content of the alcohol components above is preferably in the range of 30 wt% or more and 50 wt% or less based on the total mass of the ink.

For example, when the solvent contains only ethanol as the alcohol component, the compounding ratio of the ethanol, i.e., the addition amount of the ethanol, may be in the range of 20.0 wt% or more and 60.0 wt% or less based on the total mass of the ink. With this composition, the solubility of the fixing agent in the solvent reliably decreases, and the effect of fixing the ink containing the specific tar pigment is further enhanced. Therefore, more excellent lightfastness can be imparted to the inkjet ink.

Meanwhile, when the addition amount of the ethanol is less than 20.0 wt%, the effect of reducing the solubility of the fixing agent in the solvent can decrease. Meanwhile, when the addition amount of the ethanol exceeds 60.0 wt%, the ink is dried at the inkjet nozzles, causing nozzle clogging of the inkjet head in printing, and the intermittent resumability can decrease.

This embodiment describes a form in which water and at least one of ethanol, normal propyl alcohol, isopropyl alcohol, glycerol, and propylene glycol are contained as the solvent, but the present invention is not limited thereto. For example, the solvent in this embodiment may contain water, at least one of ethanol, normal propyl alcohol, and isopropyl alcohol, and at least one of glycerol and propylene glycol. The solvent in this embodiment preferably contains at least water, ethanol, and propylene glycol.

### (Internal-sizing resin)

The inkjet ink according to this embodiment may contain an internal-sizing resin in addition to the above-described pigment and solvent. The internal-sizing resin that can be added to the inkjet ink according to this embodiment may be an edible resin-like substance in the form of a water-soluble powder, a paste, or flakes capable of forming a coating film on the surface of a tablet when dried after printing. The internal-sizing resin includes polyvinyl alcohol (PVA), hydroxypropyl cellulose (HPC), hydroxypropyl methylcellulose (HPMC), polyvinylpyrrolidones (PVP), high molecular weight polyethylene glycol (PEG), such as polyethylene glycol 4000 or polyethylene glycol 1540, shellac resin, a methacrylic acid copolymer (product name: Eudragit S100), maltodextrin, erythritol, and the like, for example.

### (Leveling agent)

The inkjet ink according to this embodiment may contain a leveling agent in addition to the above-described pigment and solvent or the internal-sizing resin. The levelling agent that can be added to the inkjet ink according to this embodiment may be an edible and water-soluble surfactant. The levelling agent includes polyglycerol fatty acid ester (e.g., Decaglycerol distearate Q-182S or Decaglycerol monolaurate Q-12S manufactured by Taiyo Kagaku Co.,Ltd.), sorbitan fatty acid ester (e.g., NIKKOLSL-10 manufactured by Nikko Chemicals Co., Ltd.), sucrose fatty acid ester (e.g., DK Ester F-110 manufactured by DKS Co. Ltd.), polysorbate (Emazole S-120 series manufactured by Kao Corporation), and the like, for example.

### [Printing method]

The inkjet ink according to this embodiment is not particularly limited in a printing method, and is applicable to printing using an inkjet device, such as a commercially available inkjet printer. Therefore, the inkjet ink according to this embodiment has a wide range of applications and is very useful. For example, the inkjet ink according to this embodiment can be printed using a so-called drop-on-demand inkjet device including a piezoelectric element (piezoelectric ceramic) as an actuator or can be printed also using inkjet devices of other types.

The drop-on-demand inkjet device includes a thermalinkjet type device discharging an inkjet ink using steam pressure generated by instantaneously heating a microheating element to a high temperature (200°C to 300°C), an electrostatic type device discharging an inkjet ink by electrostatically vibrating an actuator, an ultrasonic type device using an ultrasonic cavitation phenomenon, and the like, for example. When the inkjet ink according to this embodiment has charging performance, a continuous ejection type device is also usable.

### [Tablet]

In this embodiment, the inkjet ink according to this embodiment may be used for printing characters or images on the surfaces of tablets, for example, using the above-described printing methods. More specifically, the tablet according to this embodiment may include printed parts, i.e., printed images, printed using the inkjet ink according to this embodiment. Insofar as the inkjet ink according to this embodiment is used, the lightfastness of the printed images provided on the surfaces of medicine tablets using the inkjet printing methods can be enhanced. Hereinafter, the composition of the tablet including the printed images printed using the inkjet ink according to this embodiment is described.

The tablet according to this embodiment is, for example, a medicine tablet. Herein, the "medicine tablet" includes film-coated tablets having an outermost surface on which a water-soluble surface layer is formed, for example, besides uncoated tablets (bare tablets), sugarcoated tablets, enteric tablets, orally disintegrating tablets, and the like.

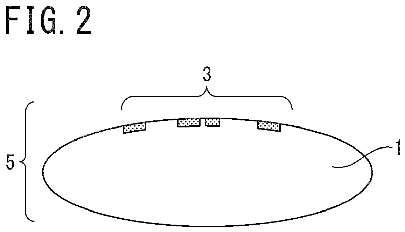

FIG. 2 is a schematic cross-sectional view illustrating one example of a medicine tablet (uncoated tablet) provided with printing (characters or images). FIG. 2 illustrates uncoated tablet printed matter 5, in cross-sectional view, with printed images 3, such as characters, printed on the upper surface of the substrate 1 of the tablet.

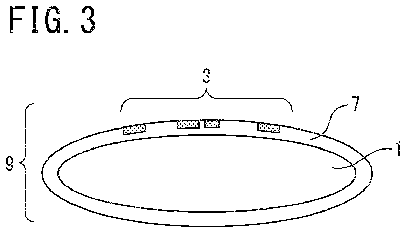

FIG. 3 is a schematic cross-sectional view illustrating one example of a medicine tablet (film-coated tablet) provided with printing (characters or images). FIG. 3 illustrates film-coated tablet printed matter 9, in cross-sectional view, with the printed images 3, such as characters, printed on the upper surface of the substrate 1 of the tablet, on the surface of which a film coating layer 7 is formed.

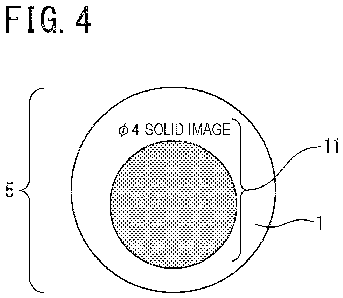

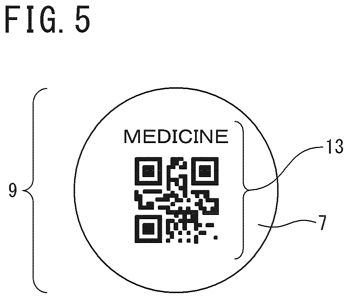

In this embodiment, a solid image may be printed as an uncoated tablet printed image 11 as illustrated in FIG. 4, or a two-dimensional barcode may be printed as a film-coated tablet printed image 13 as illustrated in FIG. 5.

The medicine tablet contains active ingredients without being particularly limited. The active ingredients include, but are not limited to, substances effective for preventing or treating various diseases (e.g., substances having a sleep-inducing effect, tranquilizer activity, antibacterial activity, antihypertensive effect, anti-angina activity, analgesic effect, anti-inflammatory activity, tranquilizing effect, diabetes treatment activity, diuretic effect, anticholinergic activity, anti-hyperacidity effect, antiepileptic effect, ACE inhibitory activity, β-receptor antagonist or agonist activity, anesthetic action, appetite suppressant action, antiarrhythmic effect, antidepressant effect, anticoagulant activity, antidiarrheal effect, antihistamine activity, antimalarial effect, antitumor activity, immunosuppressive activity, antiparkinsonian effect, antipsychotic effect, antiplatelet activity, antihyperlipidemic effect, and the like), substances having a cleaning effect, substances having a scent or a deodorant action, and the like, for example.

In the tablet according to this embodiment, carriers acceptable for the intended use can be compounded as required together with the active ingredients. For example, medicine tablets can be compounded with pharmaceutically acceptable carriers. As the pharmaceutically acceptable carriers, various organic or inorganic carrier substances, which are commonly used as formulation materials, are used, and excipients, lubricants, binders, disintegrants, thickeners, and the like are compounded, for example, as appropriate. Further, additives, such as antiseptics, antioxidants, coloring agents, and sweeteners, are also usable as required.

Although this embodiment is described taking the medicine tablet as an example of the tablet, the tablets are not limited to the tablets of the present invention. The printing targets of the inkjet ink according to this embodiment are not particularly limited. For example, the inkjet ink according to this embodiment may be printed on the surfaces of various tablets, such as tablets to be administered to non-human animals (pets, livestock, poultry, and the like), or tablets of feed, fertilizers, cleaning agents, and food tablets, such as confectionery tablets, e.g., soda-pop candy, and supplement tablets. The inkjet ink according to this embodiment is not particularly limited in the size of the printing target, and is applicable to tablets of various sizes.

### (Advantageous effects of this embodiment)

(1) The inkjet ink according to this embodiment contains: Red No. 102, lactose having solubility in 100 mL of 20°C water of less than 20 g, and a solvent, in which the compounding ratio of the lactose is in the range of 0.5 wt% or more and 15 wt% or less based on the total mass of the ink, water and at least one of ethanol, normal propyl alcohol, isopropyl alcohol, glycerol, and propylene glycol are contained as the solvent, the compounding ratio of the propylene glycol is in the range of 0.05 wt% or more and 10 wt% or less based on the total mass of the ink, and the compounding ratio of the alcohol contained as the solvent is in the range of 20 wt% or more and 60 wt% or less based on the total mass of the ink.
   With this composition, when the inkjet ink is used and printed tablets are stored in a normal humidity environment (about 50%RH), the photodiscoloration and/or photofading of the printed images can be sufficiently suppressed and the lightfastness of the inkjet ink can be enhanced as compared with conventional technologies. Further, with this composition, high printability (particularly intermittent resumability) can be maintained.
(2) In the inkjet ink according to this embodiment, it may be acceptable that the compounding ratio of the Red No. 102 is in the range of 1.0 wt% or more and 1.6 wt% or less based on the total mass of the ink, the lactose is contained as a fixing agent, the compounding ratio of the fixing agent is in the range of 1.0 wt% or more and 5.0 wt% or less based on the total mass of the ink, and the ratio of the mass of the lactose to the mass of the Red No. 102 (Lactose/Red No. 102) is in the range of 1.0 or more and 3.5 or less.
   With this composition, when the inkjet ink is used and printed tablets are stored in a normal humidity environment (about 50%RH), the photodiscoloration and/or photofading of the printed images can be sufficiently suppressed and excellent lightfastness can be imparted to the inkjet ink as compared with conventional technologies. Further, with this composition, excellent printability (particularly intermittent resumability) can be imparted to the inkjet ink.
(3) In the inkjet ink according to this embodiment, the compounding ratio of the propylene glycol may be in the range of 0.05 wt% or more and 1.5 wt% or less based on the total mass of the ink.
   With this composition, when the inkjet ink is used and printed tablets are stored in a normal humidity environment (about 50%RH), performance (enhancement of intermittent resumability or enhancement of tablet drying properties) corresponding to each component of the solvent can be imparted to the ink while the lightfastness of the inkjet ink is further enhanced as compared with conventional technologies. Further, with this composition, excellent printability (particularly intermittent resumability) can be imparted to the ink.
(4) The inkjet ink according to this embodiment may contain at least water, ethanol, and propylene glycol as the solvent.
   With this composition, the enhancement of the intermittent resumability or the enhancement of the tablet drying properties can be imparted to the ink and excellent printability (particularly intermittent resumability) can be imparted to the ink.
(5) The inkjet ink according to this embodiment may contain: only three types of solvents of water, ethanol, and propylene glycol as the solvent.
   With this composition, the enhancement of the intermittent resumability or the enhancement of the tablet drying properties can be imparted to the ink and excellent printability (particularly intermittent resumability) can be imparted to the ink.
(6) In the inkjet ink according to this embodiment, the compounding ratio of the lactose may be in the range of 2.0 wt% or more and 3.0 wt% or less based on the total mass of the ink.
   With this composition, the ink fixing effect by the lactose can be more reliably exhibited and the lightfastness of the inkjet ink can be reliably enhanced. Further, the enhancement of the intermittent resumability or the enhancement of the tablet drying properties can be imparted to the ink and excellent printability (particularly intermittent resumability) can be imparted to the ink.
(7) In the inkjet ink according to this embodiment, the compounding ratio of the Red No. 102 may be in the range of 1.0 wt% or more and 1.6 wt% or less based on the total mass of the ink.
   With this composition, good visibility can be imparted to the printed images, and the enhancement of the intermittent resumability or the enhancement of the tablet drying properties can be imparted to the ink and excellent printability (particularly intermittent resumability) can be imparted to the ink.
(8) The inkjet ink according to this embodiment may contain: lactose as the fixing agent, in which the compounding ratio of the fixing agent may be in the range of 2.0 wt% or more and 3.0 wt% or less based on the total mass of the ink.
   With this composition, the ink fixing effect by the lactose can be more reliably exhibited and the lightfastness of the inkjet ink can be reliably enhanced. Further, the enhancement of the intermittent resumability or the enhancement of the tablet drying properties can be imparted to the ink and excellent printability (particularly intermittent resumability) can be imparted to the ink.
(9) In the inkjet ink according to this embodiment, the ratio of the mass of the lactose to the mass of the Red No. 102 (Lactose/Red No. 102) may be in the range of 1.5 or more and 2.0 or less.
   With this composition, the ink fixing effect by the lactose can be more reliably exhibited and the lightfastness of the inkjet ink can be reliably enhanced. The enhancement of the intermittent resumability or the enhancement of the tablet drying properties can be imparted to the ink and excellent printability (particularly intermittent resumability) can be imparted to the ink.
(10) The inkjet ink according to this embodiment contains: Red No. 102; lactose having solubility in 100 mL of 20°C water of less than 20 g; and a solvent, in which only the lactose is contained as a fixing agent, the compounding ratio of the lactose is in the range of 1.0 wt% or more and 3.0 wt% or less based on the total mass of the ink, water, ethanol, and propylene glycol are contained and glycerol is not contained as the solvent, the compounding ratio of the propylene glycol is in the range of 0.05 wt% or more and 10 wt% or less based on the total mass of the ink, the compounding ratio of the ethanol is in the range of 20 wt% or more and 40 wt% or less based on the total mass of the ink, the compounding ratio of the Red No. 102 is in the range of 1.0 wt% or more and 1.6 wt% or less based on the total mass of the ink, and a ratio of the mass of the lactose to the mass of the Red No. 102 (Lactose/Red No. 102) is in the range of 1.0 or more and 3.5 or less.
   With this composition, when the inkjet ink is used and printed tablets are stored in a normal humidity environment (about 50%RH), the photodiscoloration and/or photofading of the printed images can be sufficiently suppressed and the lightfastness of the inkjet ink can be enhanced as compared with conventional technologies. Further, with this composition, high printability (particularly intermittent resumability) can be maintained.
(11) In the inkjet ink according to this embodiment, the compounding ratio of the propylene glycol may be in the range of 0.05 wt% or more and 1.5 wt% or less based on the total mass of the ink.
   With this composition, the enhancement of the intermittent resumability or the enhancement of the tablet drying properties can be imparted to the ink and excellent printability (particularly intermittent resumability) can be imparted to the ink.
(12) In the inkjet ink according to this embodiment, the compounding ratio of the propylene glycol may be in the range of 0.05 wt% or more and 0.1 wt% or less based on the total mass of the ink.
   With this composition, the enhancement of the intermittent resumability or the enhancement of the tablet drying properties can be imparted to the ink and excellent printability (particularly intermittent resumability) can be imparted to the ink.
(13) In the inkjet ink according to this embodiment, the compounding ratio of the Red No. 102 may be larger than the compounding ratio of the propylene glycol contained as the solvent.
   With this composition, good visibility can be imparted to the printed images, and the enhancement of the intermittent resumability or the enhancement of the tablet drying properties can be imparted to the ink and excellent printability (particularly intermittent resumability) can be imparted to the ink.
(14) The tablet according to this embodiment includes: the printed images (one example of the printed parts) 3 printed with the above-described inkjet ink.

With this composition, when the inkjet ink is used and printed tablets are stored in a normal humidity environment (about 50%RH), the photodiscoloration and/or photofading in the printed images 3 and the like directly printed on the surface or the like of the tablet can be sufficiently suppressed and the lightfastness of the printed images 3 can be sufficiently enhanced as compared with conventional technologies. Further, edibility can be imparted also to a printed image portion printed on the surface of the tablet. Further, with this composition, excellent printability (particularly intermittent resumability) can be imparted to the ink.

### [EXAMPLES]

Hereinafter, the present invention is described in more detail with reference to Examples but the present invention is not limited to Examples.

Hereinafter, a procedure of preparing inkjet inks of Examples 1 to 40 and Comparative Examples 1 to 6 is described.

### (Production of inkjet ink)

First, a printing ink was prepared. An inkjet ink contains components, such as a pigment (colorant), a solvent, and a fixing agent (lactose). As the preparation procedure, first, the lactose, which is the fixing agent, was added to the solvent to give a transparent base liquid. Subsequently, a food dye (Red No. 102) was added to the transparent base liquid. Thus, inks according to Examples and Comparative Examples were prepared. Hereinafter, the individual components are specifically described.

In this example, purified water (ion-exchanged water), propylene glycol (PG), and ethanol were individually used for the solvent. Specifically, the lactose was added to the purified water for dissolution, the propylene glycol (PG) and the ethanol were added, and the mixture was stirred for about 1 hour to give a transparent base liquid. The Red No. 102, which is the food dye, as the colorant was added to the above-described transparent base liquid to give an inkjet ink of each of Examples 1 to 40 and Comparative Examples 1 to 6.

Each of the above-described inks of Examples 1 to 40 and Comparative Examples 1 to 6 was passed through a membrane filter to remove solid foreign matter in the liquid. Specifically, each of the inks was passed once through a membrane filter (cellulose acetate film) having a pore size of 5.0 um, and subsequently, was passed once through a membrane filter (cellulose acetate film) having a pore size of 0.8 um to give a purified ink.

### <Evaluation>

The purified ink obtained by the ink of each of Examples and Comparative Examples described above was evaluated for the printability (initial printing, intermittent printing), the lightfastness (ΔE, readability), and the tablet drying properties using the following methods. The evaluation results are shown in Tables 1 to 5 shown later together with the ink compositions of Examples and Comparative Examples described above.

### (Lightfastness test)

Using a piezoelectric ceramic-driven drop-on-demand inkjet head having a print resolution of 600 dpi in the main scanning direction and 600 dpi in the sub-scanning direction (conveyance direction of a recording medium, such as a tablet) and having 1,280 nozzles in total, an image was printed on the following tablet using the purified inks of Examples 1 to 40 and Comparative Examples 1 to 6 at a printing drop quantity of 6 pl per drop. The purified inks of Examples 1 to 40 and Comparative Examples 1 to 6 described above were used (printed) in a normal humidity environment (60%RH), and the lightfastness test was performed in a normal humidity environment (50%RH).

The tablet as the printing target was a film-coated tablet for test (Base: conditioned starch, Coating agent: mixture of 70% hydroxypropyl methylcellulose and 30% titanium oxide, Diameter: 6.5 mm). The printed image was a circular solid image (Diameter: 4.0 mm). Thus, film-coated tablet printed matter was obtained.

Using a xenon weather meter (Ci4000, Toyo Seiki Seisaku-sho, Ltd.), a cumulative 1.2 million lux of visible light was applied to the film-coated tablet printed matter of Examples and Comparative Examples of which the chromaticity and the optical color density were measured. The chromaticity and the optical color density were measured using a spectrophotometer for the film-coated tablet printed matter irradiated with the visible light, and a comparison was made between the color differences ΔE (according to JIS Z 8781) indicating the change in the chromaticity and the optical color density before and after the irradiation with the visible light. The comparison results are shown in Tables 1 to 5. As described above, with respect to the change in the chromaticity and the optical color density before and after the irradiation with the visible light, the present inventors have derived the fact that, when the color difference ΔE according to JIS Z 8781 was 25 or less (ΔE ≤ 25), the photodiscoloration and/or photofading was sufficiently suppressed, and the ink had excellent lightfastness. Thus, assuming that, when ΔE ≤ 25 was satisfied, the inkjet inks had excellent lightfastness, and the inkjet inks were evaluated as "Pass" in this evaluation.

In Tables 1 to 5 below, the readability was also evaluated based on the optical density (OD value). The evaluation criteria of the readability are as follows.
⊚: 0.3 < OD
∘: 0.2 < OD ≤ 0.3
Δ: 0.15 < OD ≤ 0.2
×: OD ≤ 0.15

### (Initial printability test)

A piezoelectric ceramic-driven drop-on-demand inkjet head having a print resolution of 600 dpi in the main scanning direction and 600 dpi in the sub-scanning direction (conveyance direction of the recording medium, such as a tablet) and having 1,280 nozzles in total was used for the inkjet head. Immediately after nozzle maintenance was carried out, a test pattern was printed using the inkjet head. Then, from the printing status of the test pattern, the readability of printed characters or images in connection with the occurrence of a discharge failure region was confirmed. The evaluation criteria are as follows.
⊚: No discharge failure
∘: Readable
×: Unreadable

When the initial dischargeability was evaluated as "⊚" or "o", the inkjet inks were used without any problem, and therefore evaluated as "Pass".

### (Intermittent resumability test)

Using a piezoelectric ceramic-driven drop-on-demand inkjet head having a print resolution of 600 dpi in the main scanning direction and 600 dpi in the sub-scanning direction (conveyance direction of the recording medium, such as a tablet) and having 1,280 nozzles in total, each ink was left to stand for a specified period of time (15 min to 60 min) without flushing, a test pattern was printed using the ink at a printing drop quantity of 6 pl per drop, and it was confirmed that the ink was able to be discharged from all the nozzles without a discharge failure. In Tables 1 to 5 below, a standing time after which the ink was able to be discharged was measured as the intermittent printability (intermittent resumability) evaluation result. The evaluation criteria are as follows.
⊚: 30 min or more and less than 60 min
∘: 15 min or more and less than 30 min
Δ: 5 min or more and less than 15 min
×: Less than 5 min

### (Tablet drying properties (transfer resistance) test)

Using a piezoelectric ceramic-driven drop-on-demand inkjet head having a print resolution of 600 dpi in the main scanning direction and 600 dpi in the sub-scanning direction (conveyance direction of the recording medium, such as a tablet) and having 1,280 nozzles in total, an image was printed on the following tablet using the inkjet inks of Examples and Comparative Examples at a printing drop quantity of 10 pl per drop.

10 seconds after the printing, white copying paper pasted on a digital force gauge was brought into contact with the tablet subjected to the printing for 0.4 to 0.5 seconds at a pressure of 4 to 5 N, and then it was confirmed that the printed ink was not transferred. In Tables 1 to 5, the density of the transferred ink was visually observed as the evaluation result of the transfer resistance (drying properties). The evaluation criteria are as follows.
⊚: No ink transfer occurred.
∘: ink was slightly transferred but difficult to visually recognize.
×: Ink was densely transferred.

The inkjet ink compositions and the evaluation results of Examples are shown in Tables 1 to 4. The inkjet ink compositions and the evaluation results of Comparative Examples are shown in Table 5. In Tables 1 to 5, "blank column" portions indicate that the substances were not used. In Tables 1 to 5, the film-coated tablet is abbreviated as "FC tablet".

**[Table 1]**

| | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| Formula | Red No. 1 02 | | 1.3% | 1.3% | 2.2% | 1.6% | 1.3% | 1.0% | 0.5% | 2.2% | 1.6% | 1.3% |
| | Ethanol | | 40.0% | 40.0% | 40.0% | 40.0% | 40.0% | 40.0% | 40.0% | 40.0% | 40.0% | 40.0% |
| | NPA | | | | | | | | | | | |
| | IPA | | | | | | | | | | | |
| | PG | | 0.1% | 0.1% | 0.1% | 0.1% | 0.1% | 0.1% | 0.1% | 0.1% | 0.1% | 0.1% |
| | Glycerol | | | | | | | | | | | |
| | Lactose | | 0.5% | 1.0% | 1.1% | 1.1% | 1.1% | 1.1% | 1.1% | 1.5% | 1.5% | 1.5% |
| | Maltose | | | | | | | | | | | |
| | Sucrose | | | | | | | | | | | |
| Lactose/Red No. 1 02 ratio | | | 0.4 | 0.8 | 0.5 | 0.7 | 0.8 | 1.1 | 2.2 | 0.7 | 0.9 | 1.1 |
| Results | Printability | Initial printability | ⊚ | ⊚ | ○ | ⊚ | ⊚ | ⊚ | ⊚ | ⊚ | ⊚ | ⊚ |
| | | Intermittent printability | Δ | ○ | Δ | Δ | Δ | ⊚ | ⊚ | Δ | Δ | ⊚ |
| | Lightfastness | FC tablet ΔE | 24 | 22 | 18 | 21 | 21 | 21 | 24 | 22 | 20 | 21 |
| | | Readability | Δ | ⊚ | ⊚ | ⊚ | ⊚ | ⊚ | Δ | ⊚ | ⊚ | ⊚ |
| | Tablet drying properties | FC tablet | ⊚ | ⊚ | ⊚ | ⊚ | ⊚ | ⊚ | ⊚ | ⊚ | ⊚ | ⊚ |

**[Table 2]**

| | | | Ex. 11 | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|---|---|
| Formula | Red No. 1 02 | | 1.0% | 1.6% | 1.3% | 1.0% | 2.2% | 1.6% | 1.3% | 1.3% | 1.3% | 1.3% |
| | Ethanol | | 40.0% | 40.0% | 40.0% | 40.0% | 40.0% | 40.0% | 20.0% | 40.0% | 20.0% | 40.0% |
| | NPA | | | | | | | | | | | |
| | IPA | | | | | | | | | | | |
| | PG | | 0.1% | 0.1% | 0.1% | 0.1% | 0.1% | 0.1% | 0.05% | 0.05% | 0.1% | 0.1% |
| | Glycerol | | | | | | | | | | | |
| | Lactose | | 1.5% | 2.0% | 2.0% | 2.0% | 2.5% | 2.5% | 2.5% | 2.5% | 2.5% | 2.5% |
| | Maltose | | | | | | | | | | | |
| | Sucrose | | | | | | | | | | | |
| Lactose/Red No. 1 02 ratio | | | 1.5 | 1.3 | 1.5 | 2.0 | 1.1 | 1.6 | 1.9 | 1.9 | 1.9 | 1.9 |
| Results | Printability | Initial printability | ⊚ | ⊚ | ⊚ | ⊚ | ⊚ | ⊚ | ⊚ | ⊚ | ⊚ | ⊚ |
| | | Intermittent printability | ⊚ | ⊚ | ⊚ | ⊚ | ○ | ⊚ | ⊚ | ⊚ | ⊚ | ⊚ |
| | Lightfastness | FC tablet ΔE | 22 | 19 | 16 | 16 | 13 | 18 | 16 | 16 | 16 | 16 |
| | | Readability | ⊚ | ⊚ | ⊚ | ⊚ | ⊚ | ⊚ | ⊚ | ⊚ | ⊚ | ⊚ |
| | Tablet drying properties | FC tablet | ⊚ | ⊚ | ⊚ | ⊚ | ⊚ | ⊚ | Δ | ⊚ | Δ | ⊚ |

**[Table 3]**

| | | | Ex. 21 | Ex. 22 | Ex. 23 | Ex. 24 | Ex. 25 | Ex. 26 | Ex. 27 | Ex. 28 | Ex. 29 | Ex. 30 |
|---|---|---|---|---|---|---|---|---|---|---|---|---|
| Formula | Red No. 1 02 | | 1.3% | 1.3% | 1.3% | 1.0% | 0.5% | 1.3% | 1.3% | 1.3% | 1.6% | 1.3% |
| | Ethanol | | 40.0% | 20.0% | 60.0% | 40.0% | 40.0% | | | 40.0% | 40.0% | 40.0% |
| | NPA | | | | | | | 40.0% | | | | |
| | IPA | | | | | | | | 40.0% | | | |
| | PG | | 1.50% | 10.0% | 0.1% | 0.1% | 0.1% | 0.1% | 0.1% | | 0.1% | 0.1% |
| | Glycerol | | | | | | | | | 0.1% | | |
| | Lactose | | 2.5% | 2.5% | 2.5% | 2.5% | 2.5% | 2.5% | 2.5% | 2.5% | 3.0% | 3.0% |
| | Maltose | | | | | | | | | | | |
| | Sucrose | | | | | | | | | | | |
| Lactose/Red No. 1 02 ratio | | | 1.9 | 1.9 | 1.9 | 2.5 | 5.0 | 1.9 | 1.9 | 1.9 | 1.9 | 2.3 |
| Results | Printability | Initial printability | ⊚ | ⊚ | ⊚ | ⊚ | ⊚ | ⊚ | ⊚ | ⊚ | ⊚ | ⊚ |
| | | Intermittent printability | ⊚ | ⊚ | Δ | ⊚ | ⊚ | ⊚ | ⊚ | ⊚ | ⊚ | ⊚ |
| | Lightfastness | FC tablet ΔE | 16 | 16 | 16 | 19 | 22 | 16 | 16 | 16 | 15 | 16 |
| | | Readability | ⊚ | ⊚ | ⊚ | ⊚ | Δ | ⊚ | ⊚ | ⊚ | ⊚ | ⊚ |
| | Tablet drying properties | FC tablet | ⊚ | Δ | ⊚ | ⊚ | ⊚ | ⊚ | ⊚ | ⊚ | ⊚ | ⊚ |

**[Table 4]**

| | | | Ex. 31 | Ex. 32 | Ex. 33 | Ex. 34 | Ex. 35 | Ex. 36 | Ex. 37 | Ex. 38 | Ex. 39 | Ex.40 |
|---|---|---|---|---|---|---|---|---|---|---|---|---|
| Formula | Red No. 1 02 | | 1.0% | 1.6% | 1.3% | 1.6% | 1.3% | 1.6% | 1.3% | 1.0% | 1.3% | 1.3% |
| | Ethanol | | 40.0% | 40.0% | 40.0% | 40.0% | 40.0% | 40.0% | 40.0% | 40.0% | 40.0% | 40.0% |
| | NPA | | | | | | | | | | | |
| | IPA | | | | | | | | | | | |
| | PG | | 0.1% | 0.1% | 0.1% | 0.1% | 0.1% | 0.1% | 0.1% | 0.1% | 0.1% | 0.1% |
| | Glycerol | | | | | | | | | | | |
| | Lactose | | 3.0% | 3.5% | 3.5% | 4.0% | 4.0% | 5.0% | 5.0% | 5.0% | 5.5% | 15.0% |
| | Maltose | | | | | | | | | | | |
| | Sucrose | | | | | | | | | | | |
| Lactose/Red No. 1 02 ratio | | | 3.0 | 2.2 | 2.7 | 2.5 | 3.1 | 3.1 | 3.8 | 5.0 | 4.2 | 11.5 |
| Results | Printability | Initial printability | ⊚ | ⊚ | ⊚ | ⊚ | ⊚ | ○ | ○ | ○ | ○ | ○ |
| | | Intermittent printability | ⊚ | ⊚ | ⊚ | ⊚ | ⊚ | ○ | ○ | ○ | ○ | Δ |
| | Lightfastness | FC tablet ΔE | 17 | 14 | 15 | 14 | 15 | 14 | 15 | 17 | 15 | 15 |
| | | Readability | ⊚ | ⊚ | ⊚ | ⊚ | ⊚ | ⊚ | ⊚ | ⊚ | ⊚ | ⊚ |
| | Tablet drying properties | FC tablet | ⊚ | ⊚ | ⊚ | ⊚ | ⊚ | ⊚ | ⊚ | ⊚ | ⊚ | ⊚ |

**[Table 5]**

| | | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|
| Formula | Red No. 1 02 | | 0.5% | 1.3% | 5.0% | 1.3% | 1.3% | 1.3% |
| | Ethanol | | 40.0% | 70.0% | 12.0% | 40.0% | 40.0% | 40.0% |
| | PG | | 0.1% | 0.1% | 1.5% | 0.1% | 0.1% | 0.1% |
| | Lactose | | 0.4% | 2.5% | 10.0% | 16.0% | | |
| | Maltose | | | | | | 2.5% | |
| | Sucrose | | | | | | | 2.5% |
| Lactose/Red No. 1 02 ratio | | | 0.8 | 1.9 | 2.0 | 12.3 | | |
| Results | Printability | Initial printability | ⊚ | ⊚ | ⊚ | × | ⊚ | ⊚ |
| | | Intermittent printability | ⊚ | × | × | × | Δ | Δ |
| | Lightfastness | FC tablet ΔE | 30 | 16 | 30 | 11 | 30 | 30 |
| | | Readability | × | ⊚ | ○ | ⊚ | × | × |
| | Tablet drying properties | FC tablet | ⊚ | ⊚ | × | ⊚ | ⊚ | ⊚ |

As shown in Tables 1 to 5, the film-coated tablet printed matter of Examples 1 to 40 all had the color difference ΔE of 25 or less (ΔE ≤ 25) before and after the irradiation with the visible light as the results of the lightfastness test. Specifically, the film-coated tablet printed matter of Examples 1 to 40 all had the color difference ΔE in the range of 13 to 24, and the color difference ΔE of less than 25 before and after the irradiation with the visible light. More specifically, the inkjet inks of Examples 1 to 40 were found to sufficiently suppress the photodiscoloration and/or photofading of the printed images and be imparted with excellent lightfastness even when the inkjet inks were used and printed tablets were stored in a normal humidity environment (about 50%RH). In contrast thereto, as shown in Table 5, the film-coated tablet printed matter of Comparative Examples 1, 3, 5, 6 all had the color difference ΔE exceeding 25 (ΔE > 25) before and after the irradiation with the visible light as the results of the lightfastness test. More specifically, the inkjet inks of Comparative Examples 1, 3, 5, 6 were found to be not able to sufficiently suppress the photodiscoloration and/or photofading of the printed images and be insufficient in lightfastness when the inkjet inks were used and printed tablets were stored in a normal humidity environment (about 50%RH).

The results of the lightfastness test described above showed that the inkjet ink containing the Red No. 102 as the food dye, and the lactose belonging to disaccharides having solubility in 100 ml of 20°C water of less than 20 g as the fixing agent, in which the compounding ratio of the lactose is 0.5 wt% or more and 15 wt% or less based on the total mass of the ink, water and at least one of ethanol, normal propyl alcohol, isopropyl alcohol, glycerol, and propylene glycol are contained as the solvent, the compounding ratio of the propylene glycol is 0.05 wt% or more and 10 wt% or less based on the total mass of the ink, and the compounding ratio of the alcohol contained as the solvent is in the range of 20 wt% or more and 60 wt% or less based the total mass of the ink, sufficiently suppresses the photodiscoloration and/or photofading of the printed images and is imparted with excellent lightfastness not only when the inkjet ink is used and printed tablets are stored in a low humidity environment (about 20%RH) but when the inkjet ink is used and printed tablets are stored in a normal humidity environment (about 50%RH).

Further, as shown in Tables 1 to 5, the inkjet inks of Examples 1 to 40 were found to all have the evaluation results of the initial printability and the intermittent printability of "Δ" or higher, and have excellent lightfastness and sufficient initial printability and intermittent printability.

Further, as shown in Tables 1 to 5, the inkjet inks of Examples 1 to 40 were found to all have the evaluation results of the transfer resistance (tablet drying properties) of "o" or higher, and have excellent lightfastness and excellent tablet drying properties.

Further, the present invention can take the following compositions, for example.
(1) An ink containing: Red No. 102, lactose having solubility in 100 mL of 20°C water of less than 20 g, and a solvent, in which
   the compounding ratio of the lactose is in the range of 0.5 wt% or more and 15 wt% or less based on the total mass of the ink,
   water and at least one of ethanol, normal propyl alcohol, isopropyl alcohol, glycerol, and propylene glycol are contained as the solvent,
   the compounding ratio of the propylene glycol is in the range of 0.05 wt% or more and 10 wt% or less based on the total mass of the ink, and
   the compounding ratio of the alcohol contained as the solvent is in the range of 20 wt% or more and 60 wt% or less based on the total mass of the ink.
(2) The ink according to (1) above, in which the compounding ratio of the Red No. 102 is in the range of 1.0 wt% or more and 1.6 wt% or less based on the total mass of the ink,
   the lactose is contained as a fixing agent,
   the compounding ratio of the fixing agent is in the range of 1.0 wt% or more and 5.0 wt% or less based on the total mass of the ink, and
   the ratio of the mass of the lactose to the mass of the Red No. 102 (Lactose/Red No. 102) is in the range of 1.0 or more and 3.5 or less.
(3) The ink according to (1) or (2) above, in which the compounding ratio of the propylene glycol is in the range of 0.05 wt% or more and 1.5 wt% or less based on the total mass of the ink.
(4) The ink according to any one of (1) to (3) above contains: at least water, ethanol, and propylene glycol as the solvent.
(5) The ink according to any one of (1) to (3) above contains: only three types of solvents of water, ethanol, and propylene glycol as the solvent.
(6) The ink according to any one of (1) to (5) above, in which the compounding ratio of the lactose is in the range of 2.0 wt% or more and 3.0 wt% or less based on the total mass of the ink.
(7) The ink according to any one of (1) to (6) above, in which the compounding ratio of the Red No. 102 is in the range of 1.0 wt% or more and 1.6 wt% or less based on the total mass of the ink.
(8) The ink according to any one of (1) to (7) above contains: the lactose as the fixing agent, in which the compounding ratio of the fixing agent is in the range of 2.0 wt% or more and 3.0 wt% or less based on the total mass of the ink.
(9) The ink according to any one of (1) to (8), in which the ratio of the mass of the lactose to the mass of the Red No. 102 (Lactose/Red No. 102) is in the range of 1.5 or more and 2.0 or less.
(10) An ink containing: Red No. 102; lactose having solubility in 100 mL of 20°C water of less than 20 g; and a solvent, in which
   only the lactose is contained as a fixing agent,
   the compounding ratio of the lactose is in the range of 1.0 wt% or more and 3.0 wt% or less based on the total mass of the ink,
   water, ethanol, and propylene glycol are contained and glycerol is not contained as the solvent,
   the compounding ratio of the propylene glycol is in the range of 0.05 wt% or more and 10 wt% or less based on the total mass of the ink,
   the compounding ratio of the ethanol is in the range of 20 wt% or more and 40 wt% or less based on the total mass of the ink,
   the compounding ratio of the Red No. 102 is in the range of 1.0 wt% or more and 1.6 wt% or less based on the total mass of the ink, and
   a ratio of the mass of the lactose to the mass of the Red No. 102 (Lactose/Red No. 102) is in the range of 1.0 or more and 3.5 or less.
(11) The ink according to (10) above, in which the compounding ratio of the propylene glycol is in the range of 0.05 wt% or more and 1.5 wt% or less based on the total mass of the ink.
(12) The ink according to (10) or (11) above, in which the compounding ratio of the propylene glycol is in the range of 0.05 wt% or more and 0.1 wt% or less based on the total mass of the ink.
(13) The ink according to any one of (10) to (12) above, in which the compounding ratio of the Red No. 102 is larger than the compounding ratio of the propylene glycol contained as the solvent.
(14) A tablet including: a printed part printed using the ink according to any one of (1) to (13) above.

The scope of the present invention is not limited to the illustrated and described exemplary embodiments, and also encompasses all the embodiments that achieve effects equivalent to the intended effects of the present invention. Further, the scope of the present invention is not limited to combinations of the features of the invention defined by claims, and can be defined by any desired combinations of specific features among all the disclosed features.

### Reference Signs List

- 1: substrate of tablet
- 1S: surface
- 3: printed image
- 4: specific dye
- 5: uncoated tablet printed matter
- 7: film coating layer
- 9: film-coated tablet printed matter
- 11: uncoated tablet printed image (solid image)
- 13: film-coated tablet printed image (two-dimensional barcode)

## Claims

1. An ink comprising:
Red No. 102;
lactose having solubility in 100 mL of 20°C water of less than 20 g; and
a solvent, wherein
a compounding ratio of the lactose is in a range of 0.5 wt% or more and 15 wt% or less based on a total mass of the ink,
water and at least one of ethanol, normal propyl alcohol, isopropyl alcohol, glycerol, and propylene glycol are contained as the solvent,
a compounding ratio of the propylene glycol is in a range of 0.05 wt% or more and 10 wt% or less based on the total mass of the ink, and
a compounding ratio of the alcohol contained as the solvent is in a range of 20 wt% or more and 60 wt% or less based on the total mass of the ink.

2. The ink according to claim 1, wherein
a compounding ratio of the Red No. 102 is in a range of 1.0 wt% or more and 1.6 wt% or less based on the total mass of the ink,
the lactose is contained as a fixing agent,
a compounding ratio of the fixing agent is in a range of 1.0 wt% or more and 5.0 wt% or less based on the total mass of the ink, and
a ratio of a mass of the lactose to a mass of the Red No. 102 (Lactose/Red No. 102) is in a range of 1.0 or more and 3.5 or less.

3. The ink according to claim 1 or 2, wherein the compounding ratio of the propylene glycol is in a range of 0.05 wt% or more and 1.5 wt% or less based on the total mass of the ink.

4. The ink according to any one of claims 1 to 3 comprising at least:
water, ethanol, and propylene glycol as the solvent.

5. The ink according to any one of claims 1 to 3 comprising:
only three types of solvents of water, ethanol, and propylene glycol as the solvent.

6. The ink according to any one of claims 1 to 5, wherein the compounding ratio of the lactose is in a range of 2.0 wt% or more and 3.0 wt% or less based on the total mass of the ink.

7. The ink according to any one of claims 1 to 6, wherein a compounding ratio of the Red No. 102 is in a range of 1.0 wt% or more and 1.6 wt% or less based on the total mass of the ink.

8. The ink according to any one of claims 1 to 7 comprising:
the lactose as the fixing agent, wherein
the compounding ratio of the fixing agent is in a range of 2.0 wt% or more and 3.0 wt% or less based on the total mass of the ink.

9. The ink according to any one of claims 1 to 8, wherein the ratio of the mass of the lactose to the mass of the Red No. 102 (Lactose/Red No. 102) is in a range of 1.5 or more and 2.0 or less.

10. An ink comprising:
Red No. 102;
lactose having solubility in 100 mL of 20°C water of less than 20 g; and
a solvent, wherein
only the lactose is contained as a fixing agent,
a compounding ratio of the lactose is in a range of 1.0 wt% or more and 3.0 wt% or less based on a total mass of the ink,
water, ethanol, and propylene glycol are contained and glycerol is not contained as the solvent,
a compounding ratio of the propylene glycol is in a range of 0.05 wt% or more and 10 wt% or less based on the total mass of the ink,
a compounding ratio of the ethanol is in a range of 20 wt% or more and 40 wt% or less based on the total mass of the ink,
a compounding ratio of the Red No. 102 is in a range of 1.0 wt% or more and 1.6 wt% or less based on the total mass of the ink, and
a ratio of a mass of the lactose to a mass of the Red No. 102 (Lactose/Red No. 102) is in a range of 1.0 or more and 3.5 or less.

11. The ink according to claim 10, wherein the compounding ratio of the propylene glycol is in a range of 0.05 wt% or more and 1.5 wt% or less based on the total mass of the ink.

12. The ink according to claim 10 or 11, wherein the compounding ratio of the propylene glycol is in a range of 0.05 wt% or more and 0.1 wt% or less based on the total mass of the ink.

13. The ink according to any one of claims 10 to 12, wherein the compounding ratio of the Red No. 102 is larger than the compounding ratio of the propylene glycol contained as the solvent.

14. A tablet comprising:
a printed part printed using the ink according to any one of claims 1 to 13.
